# EUROPEAN PATENT SPECIFICATION

(11) **EP 2 371 481 B1**
(45) Date of publication and mention of the grant of the patent: **25.06.2014**
(21) Application number: 11160851.9
(22) Date of filing: 01.04.2011
(51) Int. Cl.: B23Q 1/01, B23Q 3/155, B23Q 3/157

(54) **Machining centre with tool-changing arm**
Bearbeitungszentrum mit Werkzeugwechselarm
Centre d'usinage avec bras de changement d'outil

(30) Priority: 01.04.2010 IT MO20100099
(43) Date of publication of application: 05.10.2011
(73) Proprietor: SCM Group S.p.A., 47900 Rimini (IT)
(72) Inventor: Villa, Matteo, 47853 Coriano (RN) (IT)
(74) Representative: Villanova, Massimo

(56) References cited:
- DE-A1-102007 004 633
- JP-A- 54 005 278
- JP-A- 58 223 543

## Description

### Background of the invention

The invention relates to a machining centre, in particular for machining wood or material similar to wood.

In particular, reference is made to a machining centre comprising at least one operating unit with interchangeable tools, a magazine for the tools and an automatic tool-changing system that operates between the tool magazine and the operating unit.

Specifically, but not exclusively, the invention can be used for numerical control milling and boring machining of workpieces made of wood.

The prior art comprises patent DE 102007004633, which shows a numerical control machine tool for machining workpieces made of wood, in which a longitudinal member extends in an axis Y above a horizontal machining table that is suitable for fixing workpieces. The machine has a tool-changing system with a shuttle that is slidable on the longitudinal member between a tool magazine and a slide that has an operating unit and is in turn slidable on the longitudinal member. The shuttle delivers to and removes from the operating unit the tools intended for changing.

Patent JP 54 005278 A discloses a machining centre as in the preamble of claim 1.

Various aspects of the tool-changing systems of known type intended for use in machining centres for wood are improvable.

In the first place, it is desirable to reduce the time required for changing a tool.

A versatile tool-changing system is further desirable that is able, for example, to operate effectively on various types of tool magazines.

### Summary of the invention

An object of the invention is to provide a machining centre with a tool-changing system that is able to improve one of more of the aforesaid aspects of prior-art machining centres. An advantage is time-saving due to the fact that the tool-changing system can perform at least part of the tool-changing operations, in particular the operations necessary for setting up the subsequent tool to be inserted, during normal operation of the operating unit.

An advantage is to have a member for removing/delivering tools from/to the tool magazine that can access the magazine according to various possible orientations that are selectable according to need.

An advantage is to make a tool-changing system that does not occupy a crosspiece zone on which the operating unit can slide.

An advantage is to provide a tool-changing system that is not integral with the operating unit and can therefore have a relatively reduced mass.

An advantage is to provide a versatile tool-changing system that is in particular able to adapt to various types of tool magazine.

An advantage is to enable the tool magazine to be positioned in a desired position, such as, for example, near the guide means of the supporting structure of the magazine, if this structure is movable, in order to reduce stress on the guide means.

Such objects and advantages, and still others, are achieved by the machining centre according to any one of the claims set out below.

### Short description of the drawings

The invention can be better understood and implemented with reference to the attached drawings that show two embodiments thereof by way of non-limiting example.
Figure 1 is a perspective top view of a first embodiment of a machining centre.
Figure 2 is an enlarged detail of figure 1.
Figure 3 is a view of the machining centre in figure 1 in another perspective.
Figure 4 is an enlarged detail of figure 2.
Figures 5 to 7 are three top plan views of a detail of the machining centre in figure 1 in which three different operating configurations of the tool-changing system are shown.
Figure 8 is a perspective top view of a second embodiment of a machining centre.
Figure 9 is a top plan view of a detail of the machining centre in figure 8 in which the tool-changing system is shown.

### Detailed description

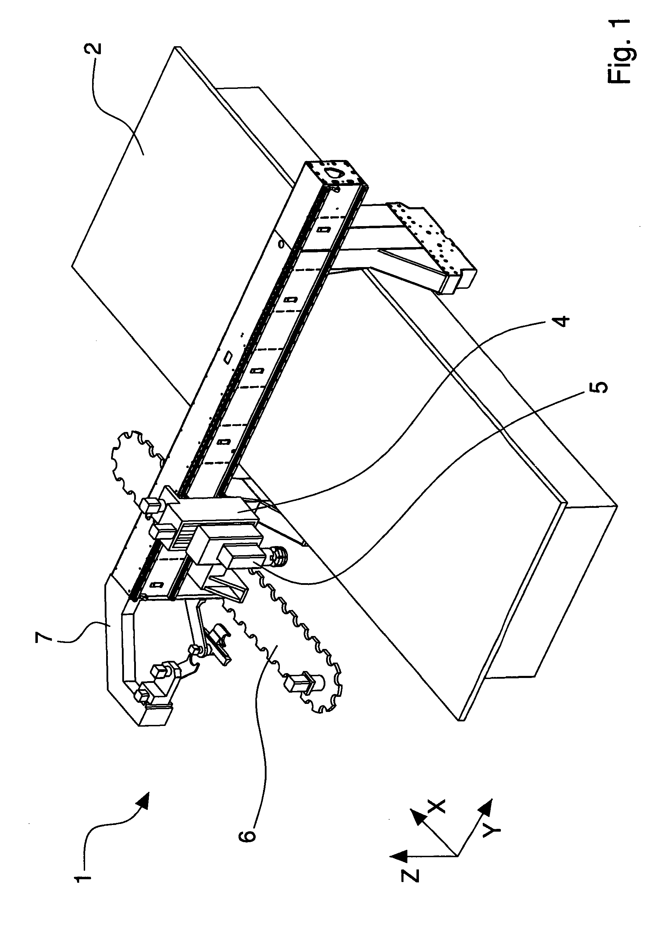

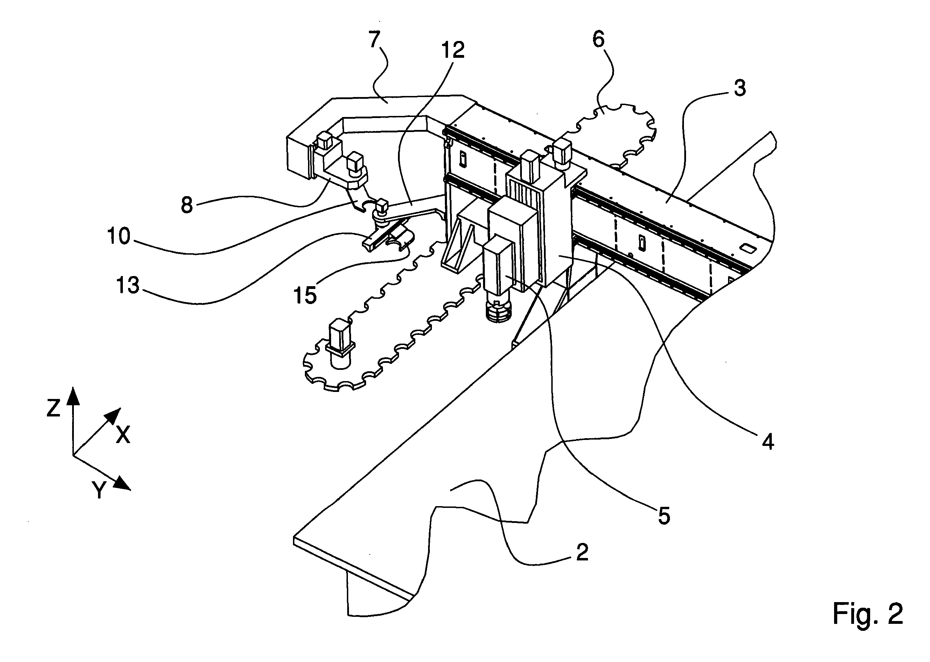

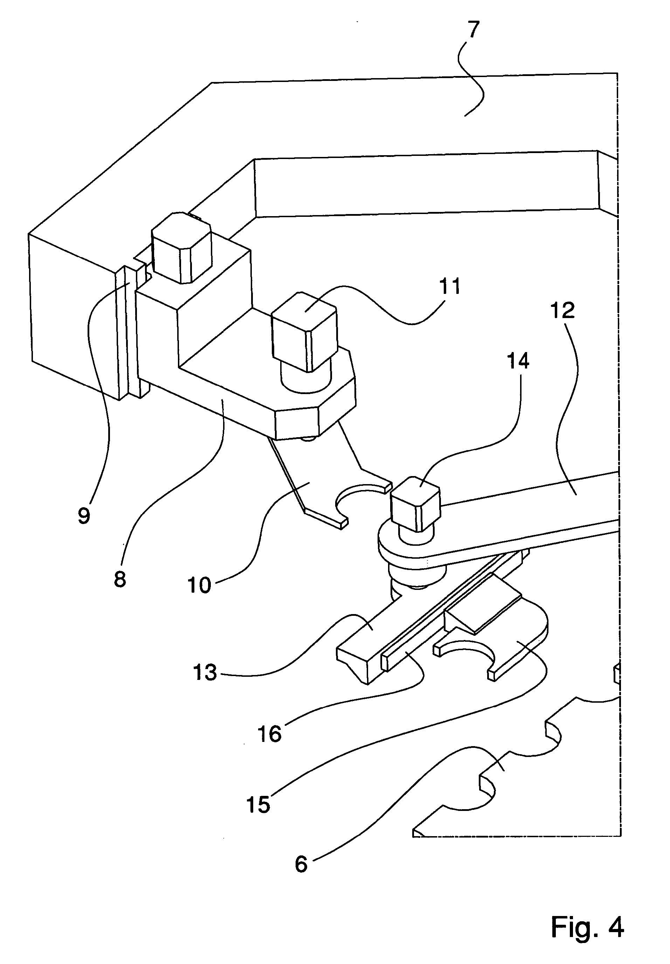

With reference to the aforesaid figures 1 to 7, with 1 has been indicated overall a numerical control machining centre for machining workpieces made of wood or of material similar to wood.

The numerical control machining centre 1 comprises a generally horizontal machining plane 2 configured for supporting a workpiece being machined. The workpiece is generally fixed to the machining plane 2. The machining plane 2, which is of known type, is arranged according to the plane defined by two axes X, Y of an orthogonal triad X, Y, Z.

A crosspiece 3 faces the machining plane 2 and extends in length along the axis Y. The crosspiece 3 is arranged above the machining plane 2. The crosspiece 3 can be part of a portal structure, of known type. It is possible to provide, in the known manner, the possibility of reciprocal movements in the axis X between the machining plane 2 and the crosspiece 3.

A slide 4, of known type, is slidably coupled with the crosspiece 3 along the axis Y. The crosspiece 3 carries guide means, of known type, extending in the axis Y, along which the slide 4 slides. The guide means is of linear type. Motor means of known type is operationally associated with the slide 4, to command movement of the slide 4.

An operating unit 5 is mounted on the slide 4 to machine a workpiece arranged on the machining plane 2. In particular, the operating unit 5 can be mounted on a further slide, of known type, interposed between the unit 5 and the slide 4; the further slide can slide on the slide 4 in the axis Z.

The operating unit 5, of known type, can comprise a tool-holding spindle, for example with a rotation axis Z. Various types of interchangeable tools can be coupled with the spindle, according to the machining to be performed.

The slide 4 (possibly in collaboration with the further slide that is movable in the axis Z) can bring the operating unit 5 to a determined tool-changing zone, as will be explained better below.

A tool magazine 6 of known type carries a plurality of tools that are couplable with the operating unit 5 in an interchangeable manner. Each tool will be received in at least one magazine seat (for example a seat of the fork type). The magazine 6 will be able to move the various tools and the respective seats in such a manner that a set tool is positioned in a desired zone for removing tools from the magazine, or in such a manner that a certain seat that is able to receive a tool is positioned in a desired zone in which tools are delivered to the magazine.

The tool magazine 6 can carry the tools arranged along a (horizontal) plane X, Y parallel to the machining plane 2 and can move the tools by maintaining the tools on the aforesaid plane in such a manner as to reach the desired removal and/or delivery zone. In the specific case of figures 1 to 7 the tool magazine is of the slidable tool conveying chain type. With 7 has been indicated a crosspiece appendage that protrudes from one end of the crosspiece 3. With 8 has been indicated a tool-changing arm support that is slidably coupled with a linear guide 9 carried by the crosspiece appendage 7. With 10 has been indicated a tool-changing arm that is rotatably supported by the support 8 around a (vertical) rotation axis oriented in the axis Z. With 11 has been indicated motor means that is arranged for performing the rotations of the arm 10; in particular the motor means 11 can be coaxial with the rotation axis Z of the tool-changing arm 10 as in the illustrated example.

The tool-changing arm 10 has two ends (opposite one another) each provided with a tool-gripping member. The tool-gripping members, which are of known type (for example of the fork type, so in the specific case it is an arm with two opposite forks) are arranged symmetrically with respect to the rotation axis Z of the arm 10. The tool-changing arm 10 is rotatable around the axis Z with the possibility of assuming (in the specific case through the effect of rotation by 180°) two first configurations in which the two ends are alternatively located in the aforesaid tool-changing zone where the operating unit 5 can arrive to perform the tool change. The transition between the two first configurations can occur, as said, by a 180° rotation of the arm 10, even if it is possible to prevent other types of movement with differently configured tool-changing arms.

The tool-changing arm 10 is further rotatable around the axis Z with the possibility of assuming two second configurations in which the two ends are, alternatively, in a certain tool-transferring zone where the arm 10 will deliver (to an intermediate conveying element, as will be explained better below) a tool to be sent to the magazine 6 and/or will remove (from the aforesaid intermediate conveying element) a tool coming from the magazine 6. The transition between the two second configurations occurs, in the specific case, by a 180° rotation of the arm 10. It will be seen that, for each end of the arm 10, the transition between a first configuration (of tool changing with the operating unit 5) and a second configuration (of tool transfer with the intermediate conveying element) can occur, in the specific case, by 90° rotations.

With 12 has been indicated a shuttle arm support on which a shuttle arm 13 is rotatably supported with the possibility of rotation around a (vertical) axis Z upon a command of the motor means 14.

The shuttle arm 13 has a shuttle 15 (which is the aforesaid intermediate conveying element) that is slidably coupled with the arm 13 along a linear guide 16 having the guide axis perpendicular to the rotation axis Z of the arm 13. The axis of the guide 16 lies on a (horizontal) plane defined by the X and Y axes and is maintained on this plane position through the effect of rotations of the shuttle arm 13. The shuttle 15 is thus rotatable around the axis Z and is movable along a movement axis that is parallel to the machining plane 2 (defined by the guide axis of the linear guide 16).

The shuttle 15 is used for transferring tools between the tool magazine 6 and the tool-changing arm 10. The shuttle 15 has a tool-gripping member (the gripping member is of known type, for example of the elastic gripper type). The shuttle 15 can move between the tool-transferring zone (where the tools are exchanged with the tool-changing arm 10) and the tool removal/delivery zone (where the tools are exchanged with the magazine 6).

The tool-transferring zone is situated at a certain distance, considered along the axis Z, from the tool removal/delivery zone. In the specific case (in which the axis Z is vertical) the tool-transferring zone is located at a different (higher) height than the height where the tool removal/delivery zone is located. In fact, the (horizontal) plane position of the magazine 6 is lower than the zone where the arm 10 operates to perform tool changing with the operating unit 5.

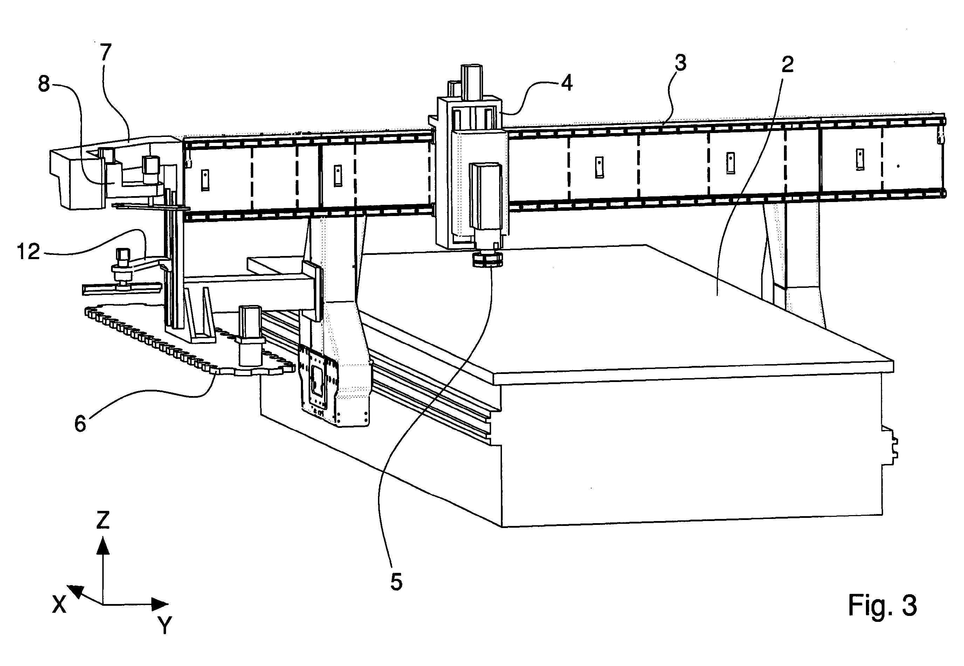

The shuttle 15 is movable along the (vertical) axis Z to enable the shuttle to move between the (higher) tool-transferring zone and the (lower) tool removal/delivery zone. This (vertical) movement is made possible, in the specific case, by the fact that the shuttle arm support 12 is movable in the axis Z. In particular, the shuttle arm support 12 can be slidable along a linear guide (illustrated in figure 3), with axis Z, integral with the crosspiece 3 (for example mounted on the portal structure to which the crosspiece 3 belongs).

The tool-changing arm 10 is movable in the axis Z (along the guides 9) to enable the gripping members of the arm to perform a vertical movement during the steps of removal/delivery of a tool from/to a corresponding gripping member of the operating unit 5 and of the shuttle 15. This movement might be slight, enough to ensure that the gripping member of an element can take the tool and the gripping member of the other element can transfer the tool. The methods of exchange of a tool between two gripping members (of two different elements) are substantially known (including the aforesaid vertical movement) and will not be discussed here in further detail.

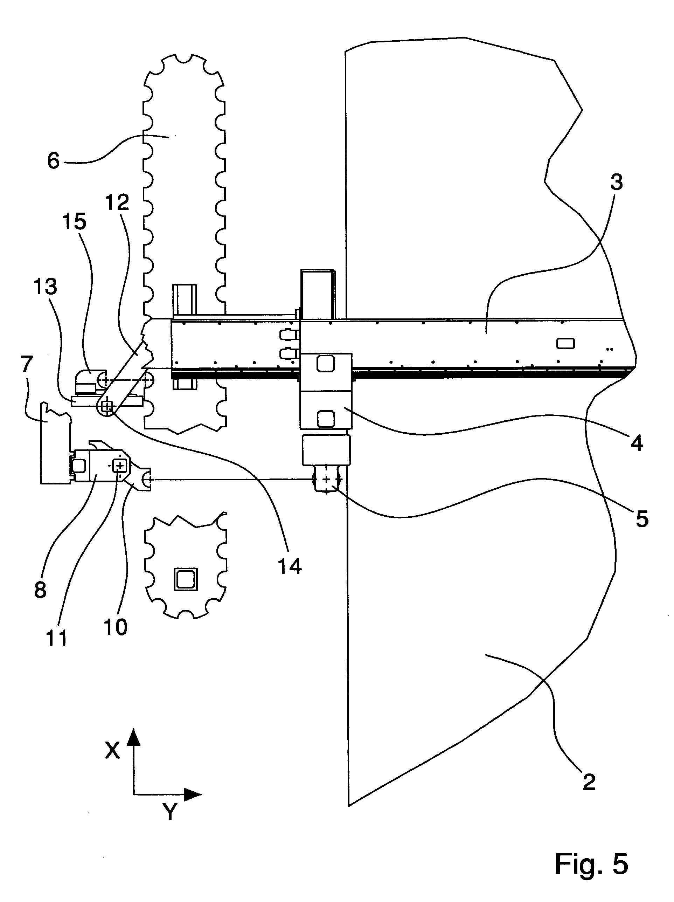

Operation is as follows. When the tool of the operating unit 5 has to be changed, the operating unit 5 will be brought to the tool-changing zone (by at least one movement in the axis Y, as in the example illustrated in figure 5), where it will find one of the gripping members of the arm 10, which will face in the direction Y facing the unit 5 and will be able to, in a known manner (with a slight movement in the direction Z performed by the arm 10 and/or by the unit 5), remove the old tool to be replaced carried by the unit 5. This gripping member will thus be empty, i.e. not occupied by any tool, whilst the gripping member arranged at the opposite end of the arm 10 will carry the new tool ready to be mounted on the unit 5 (not illustrated in figure 5 for the sake of simplicity). In figure 5 the unit 5 is shown approaching the arm 10 in the direction Y. Once the tool that has already been used has been grasped by one of the gripping members of the arm 10, the latter will perform a 180° rotation to bring the other gripping member of the arm 10, which carries the new tool to be mounted, to a suitable position for being mounted to the unit 5 (facing the unit 5 in the direction Y). Once tool-changing has been carried out, the unit 5 can return to machine a workpiece on the machining plane 2 with the new tool.

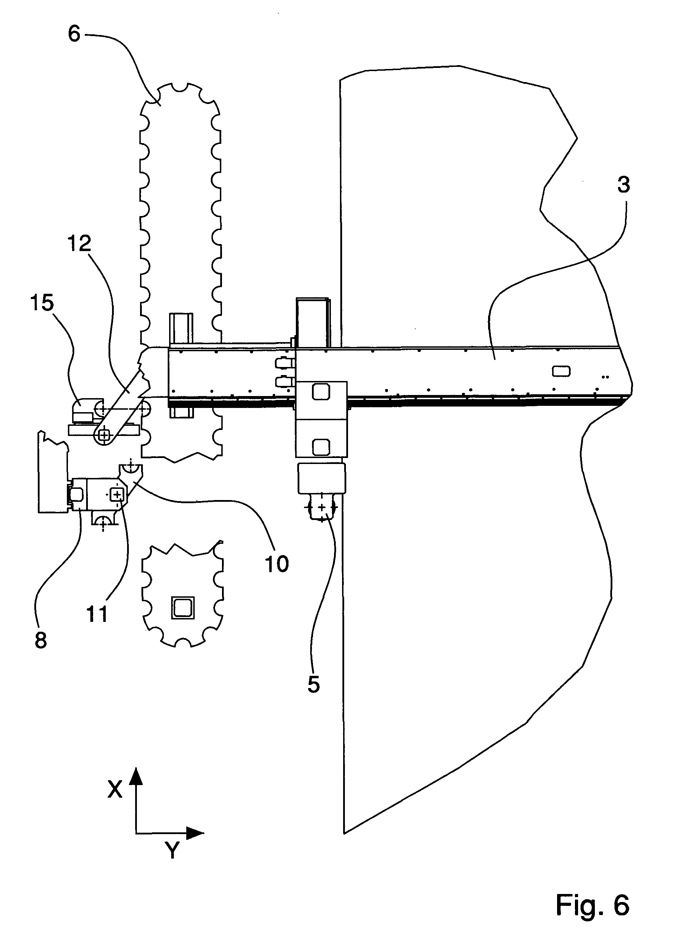

During the machining of the workpiece with the new tool, the tool-changing system can be set up for subsequent replacement. For this purpose, after receiving the old tool and delivering the new tool, the arm 10 will rotate by 90° (anticlockwise with reference to Figures 5 to 7) in such a manner that the empty gripping member can be positioned in the tool-transferring zone (figure 6), facing the shuttle 15 in the direction X, to be able to perform the transfer with the shuttle 15 that, in the meantime, will have removed from the magazine 6 the tool that is suitable for the subsequently programmed machining.

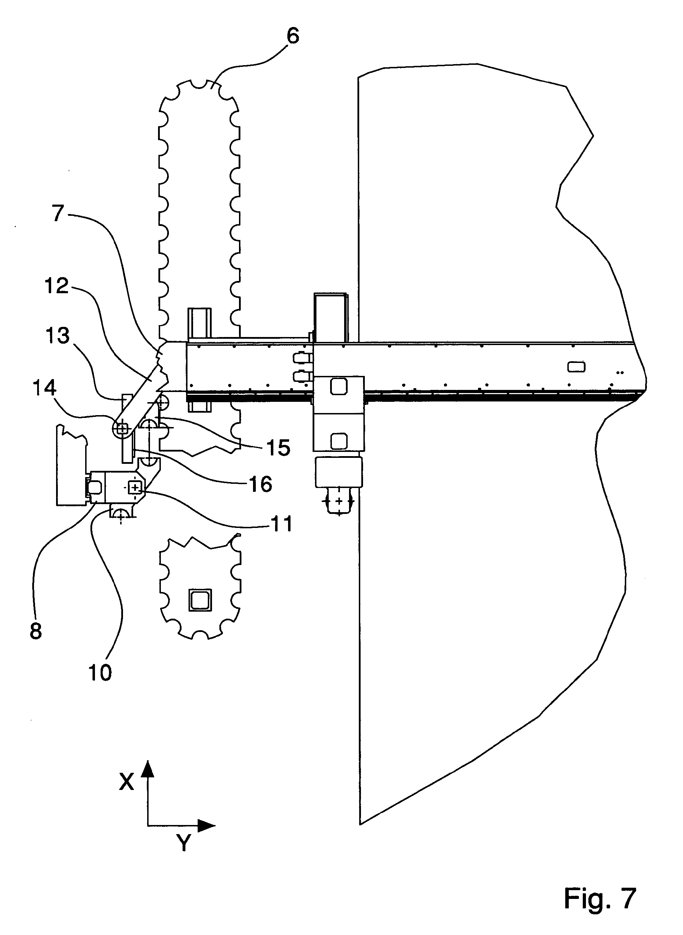

The removal of a tool from the magazine 6 by the shuttle 15 can comprise the following operations (performable simultaneously with other operations performed elsewhere by the operating unit 5 and/or by the tool-changing arm 10): the shuttle 15 approaches the magazine 6 (in the direction Y in the example illustrated in figure 5) to reach the preset tool-removal zone where the magazine will have already brought the desired tool. Once the tool has been removed (also in this case, for the removal a vertical movement can be provided, for example of the shuttle 15 by sliding in the axis Z of the arm 12) the shuttle 15 moves back (in this case always along the axis Y) carrying the tool, when the support 12 is lifted along Z, after which the arm 13 rotates by 90° around Z (this rotation is visible in the transition from figure 6 to figure 7) in such a manner as the gripping member of the shuttle 15 faces, along the axis X, the (empty) gripping member of the arm 10 (figure 7).

At this point the shuttle 15 advances in the axis X, moving along the guide 16, towards the arm 10 to then enable the transferring of the new tool from the shuttle 15 to the arm 10. Subsequently, the arm 10 will rotate by 180° to bring the other gripping member (bearing the old tool used previously) facing in the direction X the gripping member of the shuttle 15 which, being empty as it has just delivered the new tool, is able to receive the old tool to bring the old tool back to the magazine by performing in reverse order the operations disclosed previously, until the gripping member is placed opposite the magazine in the delivery zone where the magazine will have left in the same position the seat emptied by the preceding tool removal, or will have positioned (by sliding the chain) another empty seat that is suitable for receiving the old tool.

In the meantime the arm 10 can return to the initial configuration (awaiting tool-changing on the unit 5) in which it carries a further tool coming from the magazine 6 (intended for subsequent machining according to the numeric control programme) and is ready to receive the tool carried by the unit 5 and to replace the tool with this further tool, by performing a cycle like the one that has just been disclosed.

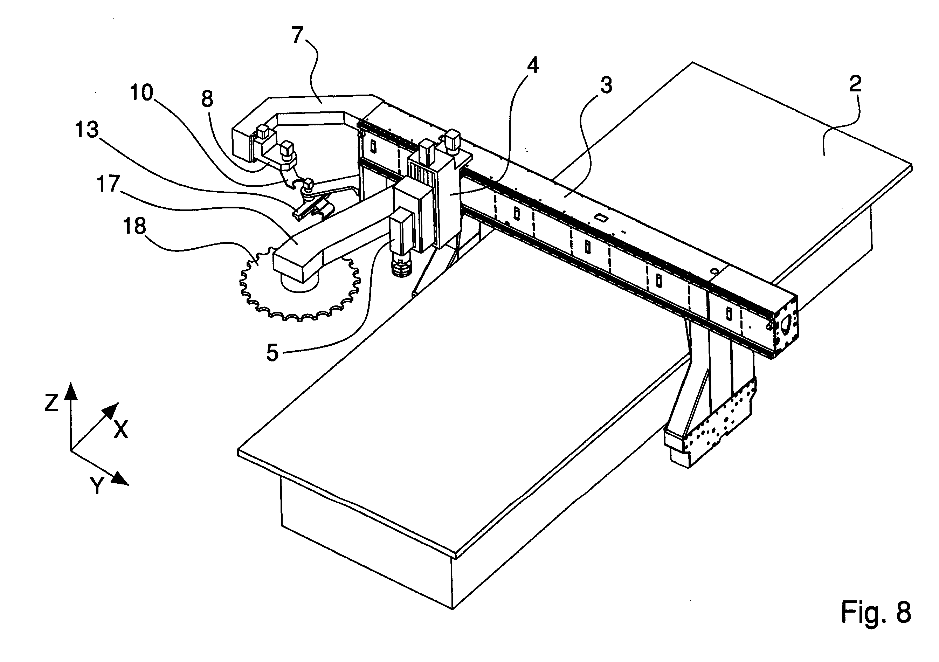

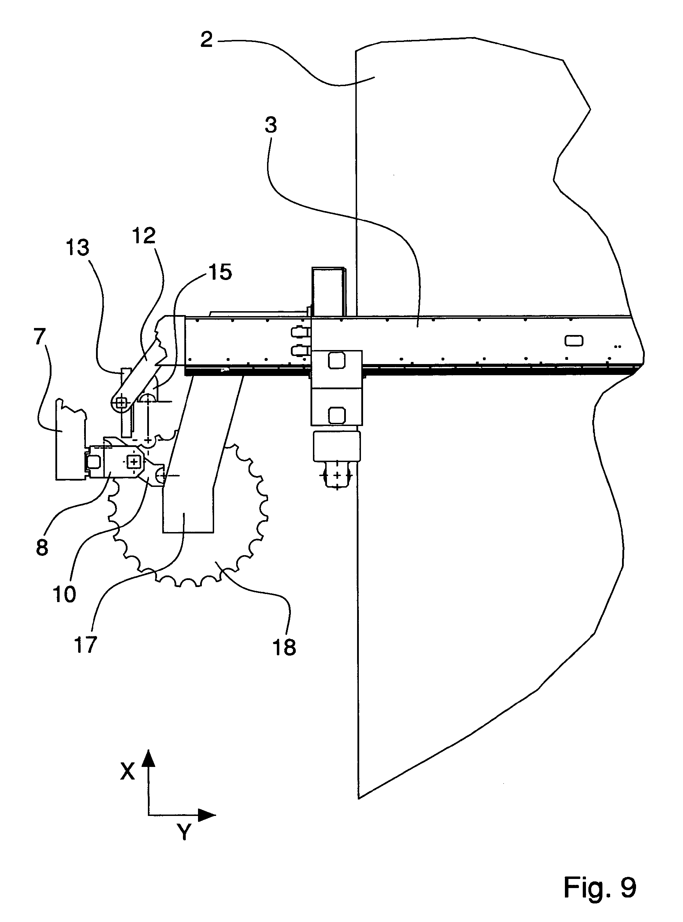

With reference to figures 8 and 9, there is illustrated a machining centre that differs from the one disclosed above by the fact that the tool magazine is of different type, being a disc-type magazine 18. Also the magazine 18 lies substantially on a horizontal plane that is lower than the arm 10. The magazine 18 can be connected (fixed integrally) to the portal structure, for example by a further crosspiece appendage 17.

The operation is substantially similar to that disclosed previously. It can be seen that the shuttle 15, by virtue of the possibility of performing rotations around Z and movements (translations) in an axis perpendicular to Z, can easily adapt to magazines of different type. In particular, it can assume the desired orientation on the plane X, Y to facilitate the delivery and removal from the magazine of the tools. In the case of the rotary-disc magazine 18, for example (see figure 9), the gripping member of the shuttle 15 will be able to face the removal/delivery zone of the magazine in the direction X, instead of the direction Y, as in the case of the chain magazine 6, or in any other orientation on the plane X, Y, (for example radially with respect to the disc) by means of an appropriate rotation of the arm 13 around Z.

### Legend:

- 1: Machining centre
- 2: Machining plane
- 3: Crosspiece
- 4: Slide
- 5: Operating unit
- 6: Tool magazine, of slidable chain type
- 7: Crosspiece appendage
- 8: Support of the tool-changing arm
- 9: Guide of the tool-changing arm support
- 10: Tool-changing arm
- 11: Tool-changing arm rotation motor
- 12: Support of the shuttle arm
- 13: Shuttle arm
- 14: Shuttle arm rotation motor
- 15: Tool-transferring shuttle
- 16: Shuttle guide
- 17: Further crosspiece appendage
- 18: Tool magazine, of rotary-disc type

## Claims

1. Machining centre (1), comprising:
- a generally **horizontal** machining plane (2) arranged according to the plane defined by two axes X, Y of an orthogonal triad X, Y, Z;
- a crosspiece (3) facing said machining plane (2) and extending in length along said axis Y;
- a slide (4) that is slidably coupled with said crosspiece (3) along said axis Y;
- an operating unit (5) mounted on said slide (4) for machining a workpiece arranged on said machining plane (2), said slide (4) being configured for bringing said operating unit (5) to a defined tool-changing zone;
- a tool-changing arm (10) having two ends, each provided with a tool-gripping member, said tool-changing arm (10) being rotatable with the possibility of assuming two first configurations in which the one and, respectively, the other of said two ends are in said tool-changing zone, and two second configurations in which the one and, respectively, the other of said two ends are in a defined tool-transferring zone;
- a tool magazine (6; 18) having several tools that are interchangeably couplable with said operating unit (5);
- a shuttle (15) for transferring tools between said tool magazine (6; 18) and said tool-changing arm (10), said shuttle (15) having a tool-gripping member, said shuttle (15) being rotatable around a rotation axis oriented in said axis Z, said shuttle (15) being able to pass between said tool-transferring zone and a tool removal/delivery zone from/to said tool magazine (6; 18);
**characterised in that** said shuttle (15) is movable along a movement axis parallel to said machining plane (2).

2. Machining centre according to claim 1, wherein said tool-transferring zone is located at a certain distance considered along said axis Z from said tool removal/delivery zone, and wherein said shuttle (15) is movable along said axis Z to enable the passage between said tool-transferring zone and said tool removal/delivery zone.

3. Machining centre according to claim 2, wherein said shuttle (15) is slidably coupled with a shuttle arm (13) along guide means (16) in said movement axis, said shuttle arm (13) being rotatably coupled with a shuttle arm support (12) around said axis Z, said shuttle arm support (12) being movable in said axis Z.

4. Machining centre according to claim 3, wherein said shuttle arm support (12) is movable in said axis Z along guide means that is integral with said crosspiece (3).

5. Machining centre according to any preceding claim, wherein said axis Z is vertical, and wherein said tool-changing arm (10) is movable in said axis Z to enable a gripping member of said tool-changing arm (10) to perform a vertical movement during the steps of removing/delivering a tool from/to a corresponding gripping member of said operating unit (5) and of said shuttle (15).

6. Machining centre according to any preceding claim, wherein said tool-changing arm (10) is rotatably coupled with a tool-changing arm support (8) that is in turn slidably coupled in said axis Z with a crosspiece appendage (7) that is integral with said crosspiece (3).

7. Machining centre according to any preceding claim, wherein said tool-changing arm (10) is rotatable around said axis Z.

8. Method for tool changing in a machining centre according to any preceding claim, said method comprising the steps of: moving said shuttle (15) in said movement axis between said tool removal/delivery zone and a first retracted position with respect to said tool removal/delivery zone; moving said shuttle (15) in said movement axis between said tool-transferring zone and a second retracted position with respect to said tool-transferring zone; moving said shuttle (15) between said first and second retracted position by means of a movement that comprises at least one rotation around said axis Z.

9. Method according to claim 8, wherein said movement of said shuttle (15) between said first and second retracted position comprises a movement in said axis Z.

10. Method according to claim 8 or 9, comprising the step of positioning one of the two gripping member of said tool-changing arm (10) in said tool-transferring zone to receive a tool from said shuttle (15), and thus the step of rotating said tool-changing arm (10) around said axis Z to position the other of the two gripping members of said tool-changing arm (10) in said tool-transferring zone to deliver another tool to said shuttle (15).

## Patentansprüche

1. Bearbeitungszentrum (1) umfassend:
- eine im Allgemeinen horizontale Bearbeitungsebene (2), die gemäß der Ebene, die über zwei Achsen X, Y von einer orthogonalen Triade X, Y, Z definiert ist, angeordnet ist;
- einen Querträger (3), der der Bearbeitungsebene (2) gegenüber liegt und sich der Länge nach entlang der Achse Y erstreckt;
- einen Schieber (4), der verschiebbar mit dem Querträger (3) entlang der Achse Y gekoppelt ist;
- eine Betriebseinheit (5), die an dem Schieber (4) befestigt ist, für ein Bearbeiten eines Werkstücks, das auf der Bearbeitungsebene (2) angeordnet ist, wobei der Schieber (4) dafür ausgelegt ist, um die Betriebseinheit (5) zu einer definierten Werkzeugwechselzone zu verbringen;
- ein Werkzeugwechselarm (10) mit zwei Enden, von denen jedes mit einem Werkzeuggreifelement versehen ist, wobei der Werkzeugwechselarm (10) drehbar vorgesehen ist mit der Möglichkeit, zwei erste Konfigurationen anzunehmen, in denen sich das eine und jeweils das andere von den zwei Enden in der Werkzeugwechselzone befindet, und zwei zweite Konfigurationen, in denen sich das eine Ende und jeweils das andere von den zwei Enden in einer definierten Werkzeugübertragungszone befindet;
- ein Werkzeugmagazin (6; 18) mit verschiedenen Werkzeugen, die untereinander austauschbar mit der Betriebseinheit (5) koppelbar sind;
- eine Transportvorrichtung (15) zum Übertragen von Werkzeugen zwischen dem Werkzeugmagazin (6; 18) und dem Werkzeugwechselarm (10), wobei die Transportvorrichtung (15) ein Werkzeuggreifelement umfasst, wobei die Transportvorrichtung (15) drehbar um eine Drehachse, die in der Achse Z ausgerichtet ist, vorgesehen ist, wobei die Transportvorrichtung (15) ausgelegt ist, um zwischen der Werkzeugübertragungszone und einer Werkzeugentfernungs-/- Lieferzone von/zu dem Werkzeugmagazin (6; 18) passieren zu können;
**dadurch gekennzeichnet, dass** die Transportvorrichtung (15) entlang einer Bewegungsachse, die parallel zu der Bearbeitungsebene (2) verläuft, bewegbar ist.

2. Bearbeitungszentrum gemäß Anspruch 1, bei dem die Werkzeugübertragungszone in einer bestimmten Entfernung, die entlang der Achse Z von der Werkzeugentfernungs-/-Lieferzone gedacht ist, angeordnet ist, und wobei die Transportvorrichtung (15) entlang der Achse Z bewegbar ist, um die Passage zwischen der Werkzeugübertragungszone und der Werkzeugentfernungs-/-Lieferzone zu ermöglichen.

3. Bearbeitungszentrum gemäß Anspruch 2, bei dem die Transportvorrichtung (15) verschiebbar mit einem Transportvorrichtungsarm (13) entlang eines Führungsmittels (16) in der Bewegungsachse gekoppelt ist, wobei der Transportvorrichtungsarm (13) drehbar mit einer Transportvorrichtungsarmlagerung (12) um die Achse Z gekoppelt ist, wobei die Transportvorrichtungsarmlagerung (12) in der Achse Z bewegbar ist.

4. Bearbeitungszentrum gemäß Anspruch 3, bei dem die Transportvorrichtungsarmlagerung (12) in der Achse Z entlang eines Führungsmittels bewegbar ist, das integral mit dem Querträger (3) ausgebildet ist.

5. Bearbeitungszentrum gemäß einem der vorstehenden Ansprüche, bei dem die Achse Z vertikal ausgebildet ist, und wobei der Werkzeugwechselarm (10) in der Achse Z bewegbar ist, um es einem Greifelement des Werkzeugwechselarms (10) zu ermöglichen, eine vertikale Bewegung während der Schritte eines Entfernens/Lieferns eines Werkzeugs von/zu einem korrespondierenden Greifelement der Betriebseinheit (5) und der Transportvorrichtung (15) durchzuführen.

6. Bearbeitungszentrum gemäß einem der vorstehenden Ansprüche, bei dem der Werkzeugwechselarm (10) drehbar mit einer Werkzeugwechselarmlagerung (8) gekoppelt ist, die wiederum verschiebbar in der Achse Z mit einem Querträgeransatz (7) gekoppelt ist, der integral mit dem Querträger (3) ausgebildet ist.

7. Bearbeitungszentrum gemäß einem der vorstehenden Ansprüche, bei dem der Werkzeugwechselarm (10) um die Achse Z drehbar vorgesehen ist.

8. Verfahren zum Werkzeugwechseln in einem Bearbeitungszentrum gemäß einem der vorstehenden Ansprüche, wobei das Verfahren die Schritte umfasst: Bewegen der Transportvorrichtung (15) in der Bewegungsachse zwischen der Werkzeugentfernung-/-Lieferzone und einer ersten bezüglich der Werkzeugentfernungs-/-Lieferzone zurückgezogenen Position; Bewegen der Transportvorrichtung (15) in der Bewegungsachse zwischen der Werkzeugübertragungszone und einer zweiten bezüglich der Werkzeugübertragungszone zurückgezogenen Position; Bewegen der Transportvorrichtung (15) zwischen der ersten und der zweiten zurückgezogenen Position mittels einer Bewegung, die wenigstens eine Drehung um die Achse Z umfasst.

9. Verfahren gemäß Anspruch 8, bei dem die Bewegung der Transportvorrichtung (15) zwischen der ersten und der zweiten zurückgezogenen Position eine Bewegung in der Achse Z umfasst.

10. Verfahren gemäß Anspruch 8 oder 9 umfassend die Schritte eines Positionierens eines von den zwei Greifelementen des Werkzeugwechselarms (10) in der Werkzeugübertragungszone, um ein Werkzeug von der Transportvorrichtung (15) aufzunehmen, und so den Schritt eines Drehens des Werkzeugwechselarms (10) um die Achse Z, um das andere der zwei Greifelemente des Werkzeugwechselarms (10) in der Werkzeugübertragungszone zu positionieren, um ein weiteres Werkzeug zu der Transportvorrichtung (15) zu liefern.

## Revendications

1. Centre d'usinage (1), comprenant :
- un plan d'usinage (2) généralement horizontal, disposé selon le plan défini par deux axes X, Y d'un système de repérage orthogonal X, Y, Z ;
- un organe transversal (3) faisant face audit plan d'usinage (2) et s'étendant longitudinalement le long dudit axe Y ;
- un coulisseau (4) qui est couplé de manière coulissante audit organe transversal (3) le long dudit axe Y ;
- une unité de commande (5) montée sur ledit coulisseau (4) pour l'usinage d'une pièce de travail disposée sur ledit plan d'usinage (2), ledit coulisseau (4) étant configuré pour amener ladite unité de commande (5) vers une zone de changement d'outil déterminée ;
- un bras de changement d'outil (10) présentant deux extrémités, pourvues chacune d'un élément de préhension d'outil, ledit bras de changement d'outil (10) pouvant pivoter en ayant la possibilité d'occuper deux premières configurations dans lesquelles l'une et, respectivement, l'autre desdites deux extrémités sont dans ladite zone de changement d'outil, et deux deuxièmes configurations dans lesquelles l'une et, respectivement, l'autre desdites deux extrémités sont dans une zone de transfert d'outil déterminée ;
- un magasin à outils (6 ; 18) comprenant plusieurs outils qui peuvent être couplés de manière interchangeable à ladite unité de commande (5) ;
- une navette (15) pour un transfert d'outils entre ledit magasin à outils (6 ; 18) et ledit bras de changement d'outil (10), ladite navette (15) comprenant un élément de préhension d'outil, ladite navette (15) pouvant pivoter autour d'un axe de rotation orienté selon ledit axe Z, ladite navette (15) étant apte à passer entre ladite zone de transfert d'outil et une zone d'enlèvement/de livraison d'outil hors dudit/audit magasin à outils (6 ; 18) ;
**caractérisé en ce que** ladite navette (15) est mobile selon un axe de mouvement parallèle audit plan d'usinage (2).

2. Centre d'usinage selon la revendication 1, dans lequel ladite zone de transfert d'outil est située à une certaine distance - considérée le long dudit axe Z - de ladite zone d'enlèvement/de livraison d'outil, et dans lequel ladite navette (15) est mobile le long dudit axe Z pour permettre le passage entre ladite zone de transfert d'outil et ladite zone d'enlèvement/de livraison d'outil.

3. Centre d'usinage selon la revendication 2, dans lequel ladite navette (15) est couplée de manière coulissante à un bras de navette (13) le long de moyens de guidage (16) selon ledit axe de mouvement, ledit bras de navette (13) étant couplé de manière pivotante à un support (12) de bras de navette autour dudit axe Z, ledit support (12) de bras de navette étant mobile selon ledit axe Z.

4. Centre d'usinage selon la revendication 3, dans lequel ledit support (12) de bras de navette est mobile selon ledit axe Z le long de moyens de guidage qui font partie intégrante dudit organe transversal (3).

5. Centre d'usinage selon une quelconque revendication précédente, dans lequel ledit axe Z est vertical, et dans lequel ledit bras de changement d'outil (10) est mobile selon ledit axe Z pour permettre à un élément de préhension dudit bras de changement d'outil (10) d'effectuer un mouvement vertical pendant les étapes d'enlèvement/de livraison d'un outil hors de/à un élément de préhension correspondant de ladite unité de commande (5) et de ladite navette (15).

6. Centre d'usinage selon une quelconque revendication précédente, dans lequel ledit bras de changement d'outil (10) est couplé de manière pivotante à un support (8) de bras de changement d'outil qui est, à son tour, couplé de manière coulissante selon ledit axe Z à un élément annexe (7) de l'organe transversal, qui fait partie intégrante dudit organe transversal (3).

7. Centre d'usinage selon une quelconque revendication précédente, dans lequel ledit bras de changement d'outil (10) peut pivoter autour dudit axe Z.

8. Procédé de changement d'outil dans un centre d'usinage selon une quelconque revendication précédente, ledit procédé comprenant les étapes qui consistent à : déplacer ladite navette (15) selon ledit axe de mouvement entre ladite zone d'enlèvement/de livraison d'outil et une première position rétractée par rapport à ladite zone d'enlèvement/de livraison d'outil ; déplacer ladite navette (15) selon ledit axe de mouvement entre ladite zone de transfert d'outil et une deuxième position rétractée par rapport à ladite zone de transfert d'outil ; déplacer ladite navette (15) entre lesdites première et deuxième positions rétractées au moyen d'un mouvement qui comprend au moins une rotation autour dudit axe Z.

9. Procédé selon la revendication 8, dans lequel ledit mouvement de ladite navette (15) entre lesdites première et deuxième positions rétractées comprend un mouvement selon ledit axe Z.

10. Procédé selon la revendication 8 ou 9, comprenant l'étape de mise en place de l'un des deux éléments de préhension dudit bras de changement d'outil (10) dans ladite zone de transfert d'outil afin de recevoir un outil provenant de ladite navette (15), et, ensuite, l'étape de pivotement dudit bras de changement d'outil (10) autour dudit axe Z afin de mettre en place l'autre des deux éléments de préhension dudit bras de changement d'outil (10) dans ladite zone de transfert d'outil afin de fournir un autre outil à ladite navette (15).
